Europäisches Patentamt

European Patent Office

Office européen des brevets

(19)

(11) **EP 1 202 045 A1**

(12) **EUROPEAN PATENT APPLICATION**
published in accordance with Art. 158(3) EPC

(43) Date of publication:
**02.05.2002 Bulletin 2002/18**

(51) Int Cl.⁷: $G01N\ 23/223$

(21) Application number: **00931791.8**

(86) International application number:
**PCT/RU00/00207**

(22) Date of filing: **30.05.2000**

(87) International publication number:
**WO 01/59439 (16.08.2001 Gazette 2001/33)**

(84) Designated Contracting States:
**AT BE CH CY DE DK ES FI FR GB GR IE IT LI LU MC NL PT SE**
Designated Extension States:
**AL LT LV MK RO SI**

(30) Priority: **11.02.2000 RU 2000103190**

(71) Applicant: **Kumakhov, Muradin Abubekirovich Moscow, 123298 (RU)**

(72) Inventor: **Kumakhov, Muradin Abubekirovich Moscow, 123298 (RU)**

(74) Representative: **Patentanwälte Zellentin & Partner Zweibrückenstrasse 15 80331 München (DE)**

(54) **METHOD FOR OBTAINING A PICTURE OF THE INTERNAL STRUCTURE OF AN OBJECT USING X-RAY RADIATION AND DEVICE FOR THE IMPLEMENTATION THEREOF**

(57)    The invention relates to means used to obtain a picture, presented in a visually perceptible form, of the internal structure of a subject in particular a biological one. According to the inventive method, X-ray radiation emitted by a source is concentrated (for example, with the aid of an X-ray lens (2)) in an area containing a point (4), placed inside an investigated field (7) of a subject (5) and to which current measurement results are related. Secondary radiation (compton, fluorescent) which emerges within said area is transported (for example, with the aid of an X-ray lens (3)) to one or several de-tectors (6). A scan-out of the investigated field (7) of the subject (5) is performed by displacing said area, and the density of the subject at that point is determined by to-taling the secondary radiation intensity values received from one or several detectors (6) and determined simul-taneously with the coordinates of the point (4). The den-sity values, together with corresponding coordinate val-ues obtained with the aid of transducers (11), are used in the unit (12) for data processing and data display in order to create a picture of the density distribution of the substance within the investigated field of the subject.

Fig. 1

EP 1 202 045 A1

## Description

The proposed inventions relate to means of intraviewing and are utilized for image formation of the internal structure of an object, in particular biological objects, with the use of X-rays. These inventions are supposed to be used in the defectoscopy and medical diagnostics.

Known are various methods and devices for the said purpose, using the traditional principles of projection roentgenoscopy. By such methods and devices the visible image of the internal structure of the object, for instance the tissues of biological objects, is obtained in the form of a shadow projection. The density of the resulting image in each of its spots is defined by total reduction of the X-rays, that passed through the object under study on the way from the radiation source to the detection device. As detectors device often used a fluorescent screen or an X-ray film is used, which is then chemically treated to obtain the image visualization (see Polytechnical Dictionary, Moscow, "Soviet Encyclopedia", 1976 [1], p. 425; Physics of image visualization in medicine. Edited by S. Webb. Moscow, "Mir", 1991 [2], p. 40-41).

In the said methods and devices the image of the real three-dimensional structure is obtained in the said two-dimensional shady projection form. The specialist analyzing the object (in particular, in technical and medical diagnostics), must have proper qualification and experience for interpretation of said shadow projection, and in some cases interpretation can be difficult for fhe following reasons: low contrast, low signal-noise relation, inevitable interference of the images of structure elements, impossibility of quantitative comparison of the individual local fragments of the object with regard to density. The definition and contrast range of the image decrease as well under the effect of quanta of secondary Compton scattered radiation hitting on the detection device.

Known are also methodes and devices for X-ray computer tomography for obtaining a two-dimensional image of a thin layer of a three-dimensional object (V.V. Piklov, N.G. Preobrazhenskiy. Computer tomography and physical experiment. Achievements of physical sciences, v. 141, 3rd ed., November 1983, p. 469-498 [3]; see also [2], p. 138-146). In such methods the detection results the object under study is repeatedly irradiated from different positions, and the radiation that passed through this object, is received by a row of detectors. The distribution of densities of the object's tissues in the cross-section under study is obtained in discrete form by solution of a system of equations with the use of a computer, the order of the equations and the quantity of the resolution elements corresponding the product of the quantity of positions, from which the irradiation is realized, by the quantity of the detectors. A three-dimensional image of the object can be obtained on the bases of a set of two-dimensional lit-parlit images by irradiation in different cross-sections. In principle a fairly high quality of the image can be obtained with the use of computer tomography devices, this image representing a picture of distribution of tissue densities (and not a picture caused by integral absorption of substance (for instance, biological tissues) located on the path the radiation takes from its source to any of the elements of visible projection). However, this can be obtained by increasing of quantity of positions of irradiation. In this case the radiation dose absorbed by the substance increases, which is undesirable (and mostly inadmissible in medical applications). Also in this type of known methods and devices the presence of the scattered Compton radiation is a negative factor. Medical applications of methods and devices of both types concerned are characterized by intensive irradiation that acts also on tissues and organs of no interest for investigation, if these are located in the path of the radiation ( in front of or behind the area under study). The irradiation in methodes and devices of the second group is less than in the first one since with different positions of irradiation different tissues and organs, surrounding those under study, are irradiated. In the devices of the second group an increase of resolution for which more sources of irradiation from different points are required, is limited, first of all, by an inacceptable increase of the irradiation dose. The technical devices for obtaining the primary information and subsequent reconstruction of the image are very complicated. It is due both to the necessity of using fast computers with special software and high demands to the precision of mechanical construction elements, which must guarantee the right localization of the same elements of resolution of the area under study when irradiating them from different points. The latter is important since in the calculations for reconstructing the image actual data must appear that are deduced in different cycles of irradiation, but refer to the same elements of resolution.

Closest to the invention are the methods and devices of the second group by which discrete information on the density of each element of resolution is obtained.

## Description of the invention

The proposed inventions are aimed on the following technical result: increase of the accuracy of defining the relative indices of the substance density of the obtained image without the need of using complicated and expensive technical means. The application of the proposed inventions in medical diagnostics and other fields of research where biological objects are affected, allows to decrease the irradiation dose on the tissues surrounding those under study.

The technical results mentioned above are achieved in the proposed method of image formation of the internal structure of an object with the use of X-rays, by concentrating this radiation should in an zone comprising a point to which the current results of measurements are referred. Secondary radiation (scattered coherent and incoherent Compton radiation, fluorescence radiation), resulting from this zone, is transported to one or more detectors. The scanning of the object's zone under study is realized by moving said zone. Simultaneously the coordinates of the point of X-ray concentration of the zone are defined and fixed to which point current results of measurement are referred. The density of the object's substance in said point is evaluated on the basis of the values of secondary radiation intensity obtained from one or more detectors and defined at the same time with the coordinates of this point. The obtained values, taken as the indices of density of the object's substance, in combination with the coordinate values corresponding to them, are used for matelling the picture of distribution of substance density of the object's area under study. For scanning the area under study the zone of X-ray concentration is moved by relative shifting the object under study and the X-ray sources that are in a fixed position relative to each other, together with the means for X-ray concentration, the means for transportation of the secondary radiation towards the detectors, and the detectors themselves.

A common feature of the known ([2], p. 138-146,[3], p. 471-472) and the proposed method consists in acting on the object under study with X-rays with relative shifting of the object under study and the X-ray optical system, the latter including X-ray sources together with their control means and detectors.

One characterizing feature of the proposed method consists in the step of concentration of X-rays in the zone comprising the point to which the current results of measurements are referred. Scanning is a common feature for known and proposed methods, but in the latter it is effected in an entirely different way, namely, by moving the current position of the zone of X-ray concentration to the vicinity of the next point, for which the substance density of the object under study shall be defined. Another characterizing feature is the step of transporting the secondary radiation (scattered Compton coherent and incoherent radiation, fluorescent radiation), excited in the concentration zone, from this zone to the detector (detectors).

In this case that acts on the detector (detectors) but said secondary radiation it is not the radiation from the source itself that passes through the subject under study. As is well known (see J. Jackson, "Classical Electrodynamics", Moscow, publ. house "Mir", 1965, pp. 537- 538 [4]), the intensity of the secondary radiation, with all other conditions remaining unchanged is proportional to the density of the substance, in which this radiation is excited, irrespective of the nature of the substance, owing to this fact the secondary scattered radiation representing a disturbing factor in the known method, becomes the information factor. The utilization of the current values of the intensity of the secondary radiation as a coefficient of substance density in the point to which the current results of measurements are referred, is also a characterizing feature of the proposed method.

According to one specific embodiment one or more collimators are used to concentrate X-rays in the zone with the point to which the current results of measurements are referred. In this case an according quantity of X-ray sources spaced apart over the area is used. The secondary radiation formed is transported to one or more detectors also by one or more collimators. In this case all collimators are oriented such that the axis of their central channels meet in the point to which the current results of measurements are referred.

According to another embodiment the X-ray concentration in the zone with the point to which the current results of measurements are referred is obtained by using one or more X-ray hemilenses which transform the divergent radiation of the according quantity of X-ray sources spaced apart over the area into quasi-parallel radiation. In this case the secondary radiation formed is transported to the one or more detectors by one or more X-ray hemilenses or lenses, focusing said radiation on the detectors. Transporting the secondary radiation to the one or more detectors can also be effected by means of one or more X-ray hemilenses forming a quasi-parallel radiation. In this case all X-ray lenses and hemilenses are oriented such that optic axis meet the point to which the current results of measurements are referred.

According to a further embodiment X-ray concentration in the zone with the point to which the current results of measurements are referred is realized by means of one or more X-ray hemilenses which transform the divergent radiation of the according quantity of the sources spaced apart over the area into quasi-parallel transporting of the secondary radiation formed to the one or more detectors, however, being realized by means of one or more collimators. In this case the X-ray hemilenses and collimators are oriented such that the optic axis of all X-ray hemilenses and of the central channels of all collimators meet in the point to which the current results of measurements are referred.

The X-ray concentration in the zone with the point to which the current results of measurements are referred can also be effected by of one or more X-ray sources spaced apart over the area and an according quantity of X-ray lenses that focus the divergent X-rays of each source in the point to which the current results of measurements are referred, transportation of the secondary radiation formed to the one or more detectors being realized by means of the X-ray lenses which focus this radiation on the detectors and possess the second focus in the said point. In the embodiment providing for X-rays concentration in the zone with the point to which the current results of measurements are referred by the use of one or more X-ray sources spaced apart over the area and the according quantity of X-ray lenses that focus the divergent roentgen radiation of each of the sources in the said point, the transportation of the secondary radiation formed to the one or more detectors can be ralized by use of collimators which are oriented such that the optic axis of their central channels meet in the same point.

The proposed device for image formation of the internal structure of an object with the use of X-rays contains a means for positioning the object under study an X-ray optic system a means for moving the means for positioning the object under study and the X-ray optic system in relation to each other, a means for data processing and image display, sensors for determining the coordinates of the point to which the measurement results are referred and which is located in the object's zone under study, the sensors being connected to the means for positioning the object under study and to the X-ray optic system, their outputs being connected to the means for data processing and display, the X-ray optic system comprising one or more X-ray sources, means for concentrating the radiation from said one or more X-ray sources in the zone with the point to which current results of measurements are referred, one or more means for transporting the secondary radiation formed, with detectors for this radiation, at their outputs, the detectors outputs being connected to the means for data processing and display.

A common feature of the known and the proposed device is the presence of the means for positioning the object under study, the X-ray optic system, the means for moving the latter relative to each other, the coordinate sensors and the means for data processing and display.

Unlike the known device, the proposed X-ray optic system contains means for concentrating the radiation from said one or more X-ray sources in the zone with the point to which the current results of measurements are referred. Besides, this system contains one or more means for transporting the formated secondary radiation to the detectors of this radiation, ensuring that precisely this radiation (and not the radiation of the source (sources) that passed through the subject under study) falls at the detectors inputs. The function of the coordinate sensors in the proposed device differs from the function of those in the known device, namely, they serve for determining the coordinates of the point to which the current results of measurements are referred. The function of the means for data processing and display differs as well: these means operates on the input data that directly carry the information about the substance density and the coordinates of the point to which these data are referred. The construction of the proposed device and the principle of its function create prerequisites for the total elimination of dependency of accuracy and resolution on the means for data processing, as these indices of the device quality are practically entirely defined by the parameters of the means for concentration of X-rays.

Other characterizing features of the proposed device according to various embodiments are described below.

According to one embodiment the X-ray system of the proposed device contains several X-ray sources. Thus every means for concentration of the radiation of the sources in the zone with the point to which the current results of measurements are referred, and every means for transporting the secondary radiation formed to the detectors, consists of a collimator with channels that are oriented to the zone of concentration of radiation from the X-ray sources. The optical axes of the central channels of all collimators meet in the point to which the current results of measurements are referred.

In this specific embodiment the X-ray sources of the X-ray optical system may be quasi-spot-like. The channels of the collimators being focused on these sources and diverging (widening) towards the means for positioning the object under study. A screen with an aperture is located between the output of each X-ray source and the input of the corresponding collimator.

In the same embodiment case the X-ray sources of the X-ray system may also be extended, the channels of the collimators converging (narrowing) towards the means for positioning the object under study.

In another embodiment of the proposed device, the X-ray sources of the X-ray system are quasi-spot-like, each means for concentration of the X-rays in the zone with the point to which the current results of measurements are referred being made as an X-ray hemilens that transforms the divergent radiation of the corresponding source to quasi-parallel, and each means for transporting the Compton secondary radiation formed towards the detector being made as an X-ray hemilens that focuses this radiation on the detector. The optic axes of all X-ray hemilenses meet in the point to which the current results of measurements are referred.

In a further embodiment of the proposed device, as in the previous one, the X-ray sources of the X-ray system are also quasi-spot-like, each means for X-ray concentration in the zone with the point to which the current results of measurements are referred, being made as X-ray hemilens that transforms the divergent radiation of the corresponding source to quasi-parallel. However, in distinction to the previous case, each means for transporting the secondary radiation formed to the detector is made as X-ray hemilens having a focus in the point to which the current results of measurements are referred transforming the said radiation into a quasi-parallel one and directing it at the detector. Thus the optical axes of all X-ray hemilenses meet in the point to which the current results of measurements are referred.

According to still a further embodiment of the proposed device the X-ray sources of the X-ray optical system are also quasi-spot-like, each means for concentration of X-rays in the zone with the point to which the current results of measurements are referred being made as X-ray hemilens which transforms the divergent radiation of the corresponding source to a quasi-parallel one. However, in contrast to the embodiment described above each means for transporting the secondary radiation formed to the detector is made as X-ray lens that focuses this radiation on the detector and has its the second focus in the zone of X-ray concentration. The optic axis of all X-ray hemilenses and lenses meet in the point to which the current results of measurements are referred to

In the following embodiment as in the previous two embodiments, the X-ray sources of the X-ray optical system are quasi-spot-like and each means for X-ray concentration in the zone with the point to which the current results of measurements are referred, is made as X-ray hemilens which transforms the divergent radiation of the corresponding source to a quasi-parallel one. As this takes place each means for transporting the secondary radiation formed to the detectors is made as collimator with channels that diverge (widen) towards the corresponding detector. The optic axes of all X-ray hemilenses and the central channels of the collimators meet in the point to which the current results of measurements are referred.

The X-ray optical system of the proposed device can have the following construction. The X-ray sources of this system are quasi-spot-like. Each means for X-ray concentration in the zone with the point to which the current results of measurements are referred, is made as X-ray hemilens that transforms the divergent radiation of the corresponding X-ray source into a quasi-parallel one. Each means for transporting the secondary radiation formed to the detector is made as a collimator having channels which converge (narrow) towards the corresponding detectors. The optic axes of all X-ray hemilenses and the central channels of the collimators meet in the point to which the current results of measurements are referred.

The next embodiment of the proposed device is characterized by the following features: The X-ray sources of the X-ray optical system are quasi-spot-like; each means for X-ray concentration in the zone with the point to which the current results of measurements are referred is made as X-ray hemilens that focuses the divergent radiation of the X-ray source; each means for transporting the secondary radiation formed towards the detector is made as a collimator with channels that narrow (converge) towards the corresponding detector. Thus the optic axes of all X-ray lenses and the central channels of the collimators meet in the point to which the current results of measurements are referred.

One more embodiment of the device is characterized by the following feature:
The X-ray sources of the X-ray optical system are quasi-spot-like; each means for X-ray concentration in the zone with the point to which the current results of measurements are referred, is made as X-ray lens that focuses the divergent radiation of X-ray source; each means for transporting the Compton secondary radiation formed towards the detector is made as a collimator with channels that widen (diverge) towards the corresponding detector. Thus the optic axes of all X-ray lenses and the central channels of the collimators meet in the point to which the current results of measurements are referred.

The proposed inventions are illustrated by the enclosed drawings in which

Fig. 1 depicts the basic principales of the proposed device and represents a scheme showing the location and interconnection of the main elements of the device for carrying out the proposed method;

Figs. 2 and 3 depict embodiments of the proposed method and device with the use of collimators for concentration of X-ray and transporting the secondary radiation towars the detectors;

Figs. 4 and 5 depict the same with the use of X-ray hemilenses;

Fig. 6 depict the same with the use of X-ray hemilenses for X-ray concentration and "full" X-ray lenses for transporting the secondary radiation towars the detectors;

Figs. 7 and 8 depict the same with the use of X-ray hemilenses for X-ray concentration and collimators for transporting the secondary radiation towars the detectors;

Fig. 9 depicts the same with the use of X-ray lenses for X-ray concentration and transporting the secondary radiation towards the detectors;

Figs. 10 and 11 depict the same with the use of X-ray lenses for X-ray concentration and collimators for transporting the secondary radiation towards the detectors.

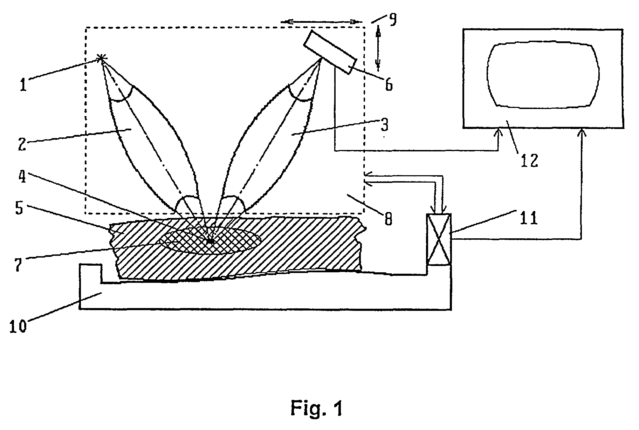

The proposed method is carried out by means of the proposed suggested device as follows:
Divergent X-rays from the quasi-spot-like source 1 (Fig. 1) is focused by X-ray lens 2 in the predetermined point 4 of the area under study 7 of an object 5 (for instance a biological object). This object 5 is positioned as required by means of the means for positioning 10. The radiation that is focused in the point 4, excites the secondary scattered radiation of the substance of the object 5 (coherent and incoherent Compton radiation, fluorescence radiation). The intensity of the secondary radiation is proportional to the density of the substance from which the radiation appears with a precision that includes also the fluctuations that are caused by the stochastic character of the process of exciting of the secondary radiation appears. The focus of the second X-ray lens 3 is in the same point 4. Lens 3 captures and then focuses the scattered secondary radiation on the detector 6, which transforms it to an electrical signal that is conducted to the input of the means for data processing and display 12. The position of the common focus point 4 of the lenses 1 and 3 is chosen by moving the means 10 for positioning the object and the group of the devices elements (the X-ray optical system 8 with X-ray source 1, X-ray lenses 2, 3, and the detector 6 of radiation) relative to each other.

It should be explained that the lenses for controlling the X-rays (focusing the divergent radiation, forming a quasi-parallel beam from the devergent radiation, focusing of the quasi-parallel beam, etc.) represent a combination of curved channels for transporting the radiation. The radiation in these channels is exposed to multiple total external reflections (see, for instance: Arkadiev V.A., Kolomiytsev A.I., Kumakhov M.A. et al. Broadband X-ray optic with wide angular aperture. The Progress of Physics, 1989, vol. 157, issue 3, p. 529-537 [6], where the first lens of this type is described; US patent No. 5744813 (published 28.04.98) [7], where the modern lens is described). A lens as a whole is barrel-shaped (i.e. it is narrowing toward both ends), if the lens is meant for focusing the divergent radiation, or it is half barrel-shaped (i.e. only one end is narrowing), if it is meant for transforming divergent radiation into quasi-parallel radiation, or for focusing said radiation. The terms "full lens" and "hemilens" are widely used for the lenses of said two types.

Fig 1 depicts two possible variants of functioning and usage application of the device. In one variant the means 10 for positioning the object under study with the object under study 5 placed in it, is static, and the X-ray system is moved, (Fig. 1, arrows 9 show the possibility of displacement of the X-ray system), preserving the mutual arrangement of the elements 1, 2, 3 and 6 (consequently preserving also the common focus of the lenses 1 and 3). In the other variant, vice versa, X-ray system 8 is static, and the means 10 for positioning the object under study 5 displace together with the object 5. The decision to use one variant on the depends on the size of the object 5 and its weight as compared to size and weight of the group of the above-listed elements that make up X-ray system 8.

The device contains also a coordinate detector 11 that reacts to the relative displacement of X-ray optical system 8 and the means 10 for positioning, the latter being connected with the detector 11. The detector 11 must be adjusted to form signals that are proportional to the current coordinates of the common focus point 4 of the lenses 2 and 3 in relation to the chosen origin of reading which is connected to the means 10 for positioning. The output signals of the detector 11, as well as the output signal of the detector 6, are supplied to the inputs of the means 12 for data processing and display. In this case the focus point 4 is the point to which the current results of measurements are referred; the radiation of the source 1 is concentrated, in fact, in the surroundings of this point, considering the finite dimension of the focus zone of X-ray lens 2. The means 12 for data processing and display provides for image reconstruction of density distribution, realizing one or other formation algorithm of two- or three-dimensional image on the screen (see, for instance, E. Lapshin. Graphics for IBM PC. Moscow, publ. house "Solon", 1995 [5]). In the simplest case, when, for instance, scanning (the displacement of the zone of X-ray concentration with the point 4 to which the current results of measurements are referred) is realized on some plane section of the object 5, image scan of the means 12 with long afterglow on the screen can be performed simultaneously. The storing of the definite number of the measurement results with the succeeding periodical image scan is possible as well, etc.

The principal of operation of suggested inventions is based on the fact that the density of the scattered secondary Compton radiation (the probability of quanta formation of this radiation) is proportional to the substance density, all other factors being equal (in particular, at given primary X-rays intensity, acting on the substance).

As it was said in the description of the suggested method and device essence, the main feature of these inventions is the use of quanta of the scattered secondary Compton radiation as informants, as distinct from the known methods and devices, in which the quanta have harmful effect. As was mentioned above, when the proposed inventions are used in medicine, the possibility of production of the reasonable accuracy, when the irradiation doses of biological tissues decrease, is the important advantage.

To estimate the possible gain let's take the following suppositions: the photons energy is E=50 keV; X-rays concentration zone is at the 50 mm depth and has dimensions 1 mm x 1 mm x 1 mm (these values are, for instance, characteristic for the observing conditions and precise work in the mammography researches); the detector senses 5% of the secondary radiation, originating at 5 cm depth (this supposition means that the secondary radiation covers a distance of 5 cm in the patient's body, before this radiation falls on the input of the means for the radiation transporting to the detector, thus the capture angle of the lens or collimater, delivering the secondary radiation to the detector, is $0.05 \times 4\pi$ steradian). Taking into account that the linear photon absorption factor in the patient's body is close to such in the water, at the energy of -e=50 keV it is of the order of $2 \times 10^{-1}$ 1/cm, so we get the following: the intensity of the primary radiation beam, penetrating at the depth of 5 cm, decreases in $\exp(2 \times 10^{-1} \times 5) = e \approx 2.71$ times. The intensity of the secondary radiation (its photon energy is close to 50 keV) decreases, as well, in $e \approx 2.71$ times, emerging from the patient's body. Thus, the total intensity loss as a result of the radiation absorption in the patient's body is $e \times e \approx 7.3$ times. Let's take into consideration only Compton component of the secondary radiation, underrating the estimated gain. The probability of formation of quanta of the Compton secondary radiation at the thickness $\sigma_k$ is $\varphi = \sigma_k \times N_e \times \Delta\chi$, where the section of the secondary Compton scattering is $\sigma_k = 6.55 \times 10^{-25}$ cm$^2$; the electrons density in the water is $N_e = 3 \times 10^{23}$ 1/cm$^3$. Thus, at $\Delta\chi = 1$ mm $= 10^{-1}$ cm the probability of $\varphi = 6.55 \times 10^{-25} \times 3 \times 10^{23} \times 10^{-1} \approx 2 \times 10^{-2}$. In other words, in average, 1 : $(2 \times 10^{-2})$ = 50 photons of the primary radiation are necessary to form one secondary photon on the length $\Delta\chi = 1$ mm.

Let's require that the error of the density estimate (i.e. the quantity of secondary photons dating) should be of 1% order. With consideration of the probable process character the mean square value of the relative error is $\sigma = 1/(N)^{1/2}$, where N is the quantity of the registered photons. N = 10000 corresponds to the value $\sigma = 0,01$.

Now it's possible to set up a simple equation for $N_x$ - the necessary quantity of primary photons, penetrating 5 cm depth and forming there the secondary Compton radiation. It penetrates, in its turn, 5 cm depth, and in this case N = 10000 photons fall on the detector:

$$N_x \times e^{-2} \times 5 \times 10^{-2} \times 2 \times 10^{-2} \ 10^4.$$

Here the coefficient $5 \times 10^{-2}$ means that only $5\% = 5 \times 10^{-2}$ photons fall on the detector and are registered of the total quantity of the formed secondary photons. The equation gives $N_x = 7,3 \times 10^7$.

Photons with the energy E = 50 keV form the irradiation zone equal to 1 roentgen, if the photon flux is equal to $2,8 \times 10^{10}$ 1/cm$^2$ (tabulated data for the relationship between the photon energy, their quantity and the doze see, for instance, in [2]). If the cross-section of the primary X-rays beam is equal to 1 cm$^2$ on the input of the patient's body, so the flux $7,3 \times 10^7$ 1/cm$^2$ forms the irradiation zone equal $2,6 \times 10^{-3}$ roentgen in the patient's body.

In traditional X-rays tomography, for instance, when examining osteoporosis, the irradiation doze is usually $100 \div 300$ milliroentgen, i.e. 100 times larger (V. I. Mazurov, E.G. Zotkin. Topical questions of osteoporoses diagnostics and treatment. Saint-Petersburg, IKF "Foliant", 1998, p. 47 [8]).

The doze can be decreased in several times if the irradiation is performed from several sources, which beams fall on the concentration zone in different ways and thei don't store in the patient's body.

Therfore it's more appropriate to use that variants of carrying out the suggested method and device, in which several spaced X-ray sources and the detectors with corresponding quantity of the means for radiation concentration and the secondary Compton radiation transporting towards the detectors (lenses, halflenses, collimators) are used. On one hand, it allows to obtain more effective radiation concentration (if the only means for concentration is used this concentration is possible only with the use of X-ray lens, as shown in fig. 1), and to increase the signal/noise relation on the detectors outputs. On the other hand, it makes possible to spread X-rays influence on the object under study, and to avoid the irradiation over doze on the object parts, which are not supposed to be studied. The use of several detectors with simple averaging (or more complicated processing of the output signals of the different detectors of the means 12 for data processing and image (for instance, "weighting" averaging), or processing, considering the presence of densities correlation in the points close to each other), all other things being equal, allows to use X-ray sources of lesser power without the accuracy loosing. Besides, as averaging, the influence of other factors, decreasing the accuracy, falls (for instance, various absorption of the radiation by the source on the way towards the different points for the density determining, and the secondary radiation on the way from these points toward the inputs of the means for the secondary Compton radiation transporting towards the detectors).

These variants are examined below (fig. 1 - fig. 11).

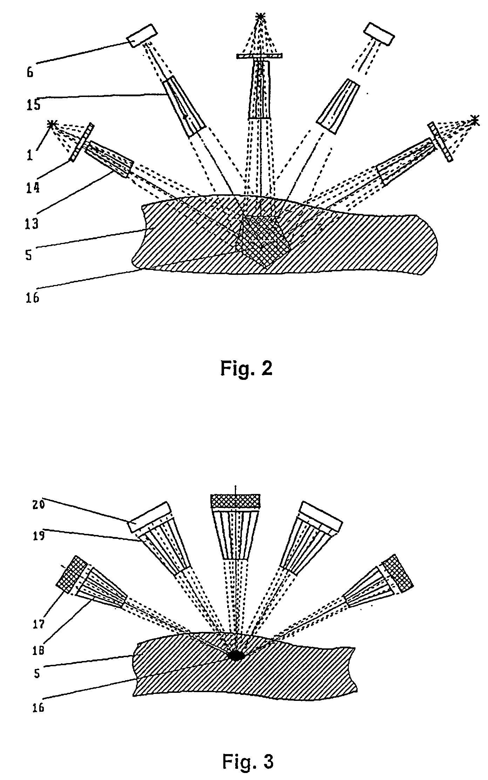

The variants, shown in Fig. 1 and Fig. 2, are simplest for the technical realization.

In the scheme in Fig. 2 quasi-pointed X-ray sources 1 and the collimators 13 with the channels, diverging (widening) toward the radiation distribution for this radiation concentrating in the zone 16, are used. The screens 14 with apertures for the radiation transmission on the collimators inputs, and preventing the radiation direct falling on the object (bypassing the collimators), are positioned between the source 1 and the collimators 13. The secondary radiation is transported to the detectors 6 by the collimators 15 with the channels, converging (narrowing) toward the radiation propagation (i.e. toward the detectors 6). These channels can have the focus on the detectors sensitive surface. It's possible to use, as the detectors 6 for instance, the semiconductor detectors with the small entrance aperture.

In Fig. 3 the collimators have the orientation, opposite the one, shown in the Fig.2. It's appropriate to use the extended X-ray sources 17 to take full advantage of the entrance aperture of the collimators 18, concentrating the radiation in the zone 16. It's the same reason to use the detectors 20 with the wide aperature (for instance, of the scintillation type).

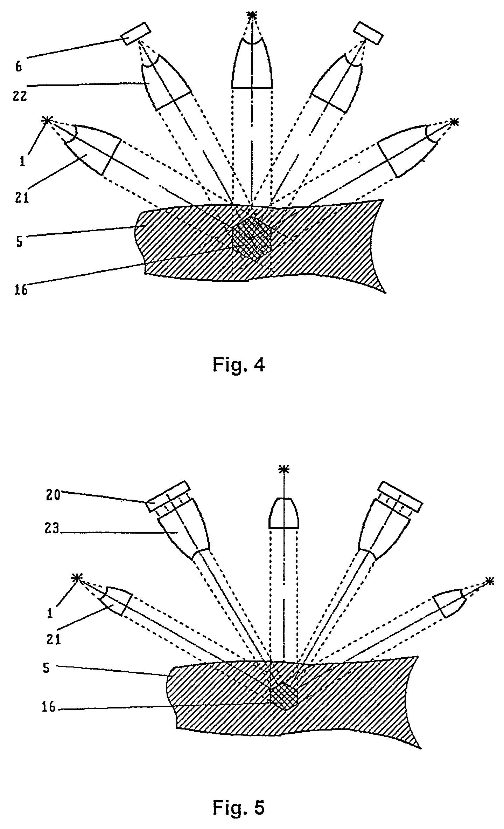

In Fig. 4 the means for the radiation concentration of the quasi-pointed sources 1 and the means for the secondary radiation transporting are made as X-ray half-lenses 21, 22 correspondingly. As this takes place the half-lenses 22 focus the scattered secondary radiation on the detectors 6.

In Fig. 5 the means for the radiation concentration of the quasi-pointed sources 1 and the means for the secondary radiation transporting are made as X-ray half-lenses 21, 23 correspondingly. As this takes place the half-lenses 23 transform the scattered secondary radiation to quasi-parallel and direct it to the detectors 20 with the wide entrance aperture.

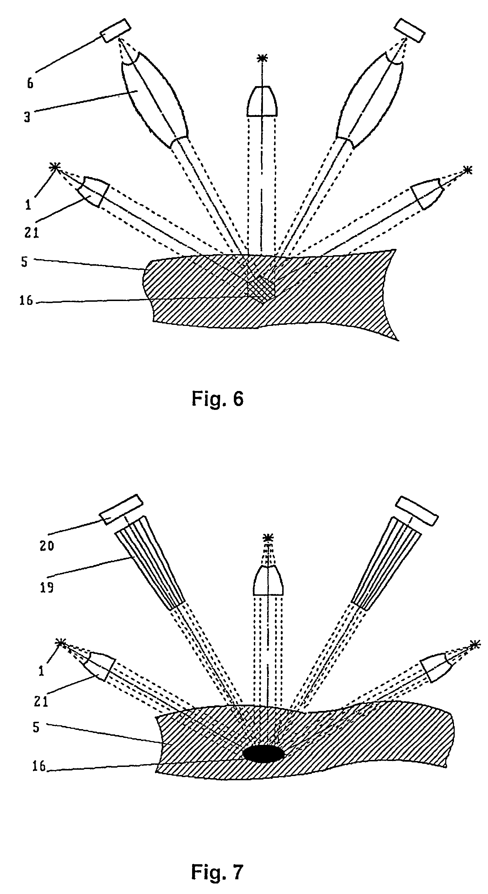

In Fig. 6 the combined variant is shown: the means for the radiation concentration of the quasi-pointed sources 1 are made as X-ray half-lenses 21, directing the parallel beams to the zone 16. And the means for the secondary Compton radiation transporting to the detectors 6 are made as the "full" X-ray lenses 3.

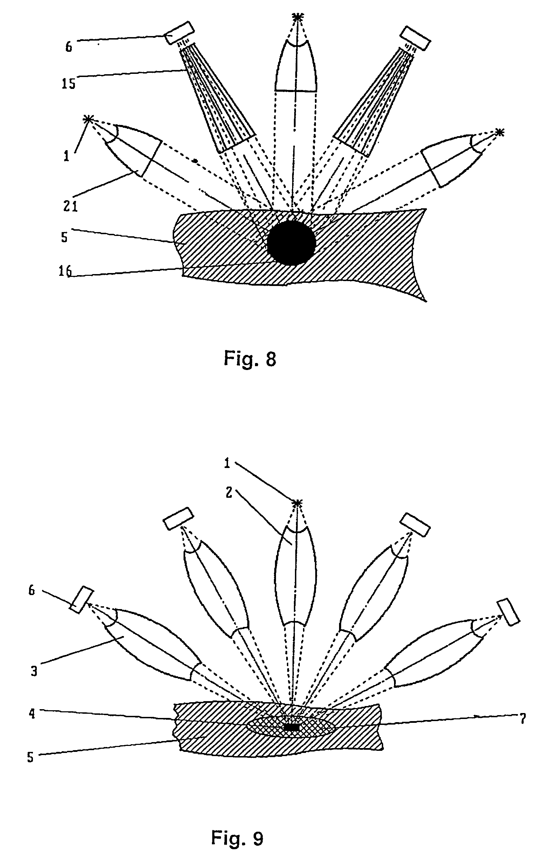

In Figs. 7 and 8 the other combinations are shown, differing from the previous one in the fact that the means for the secondary Compton radiation transporting toward the detectors are made as the collimators.

In Fig. 7 the collimators 19 have the channels, widening to the detectors 6, and the last ones have the wide entrance aperture.

In Fig. 8, the collimators 15, vice versa, have the channels, narrowing to the detectors 6, and the last one have the narrow entrance aperture.

In Fig. 9 the most effective variant with respect fot the accuracy and resolution is shown. In this variant the means for the radiation concentration of quasi-pointed sources 1 and the means for the secondary radiation transporting to the detectors 6 are made as the "full" lenses 2 and 3 correspondingly (compare this variant with the one, shown in the Fig. 1).

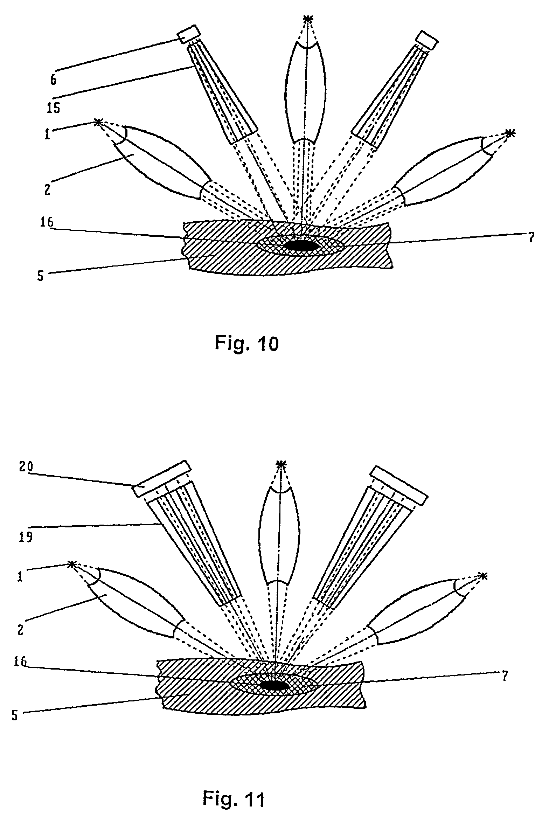

In Fig. 10 and 11 two more combined variants are shown. They are common in using the "full" X-ray lenses 2 as the means for the radiation concentration of the quasi-pointed sources 1.

In Fig. 10 the use of the collimators 15, narrowing toward the detectors, is shown as the means for the secondary radiation transporting to the detectors 6 with the narrow aperture.

In Fig. 11 the use of the collimators 19, widening toward the detectors, is shown as the means for the secondary Compton radiation transporting to the detectors 20 with the wide aperture.

The use one or another scheme of realization of the method and the device modeling depends on: the opportunity to use such effective means for radiation concentration and transporting (i.e. X-ray lenses and half-lenses), and the required resolution. The last factor influences on the choice of the lenses and half-lenses parameters as well (such as the size of the focal spot, the extent of the focal zone toward the lens optic axis, etc.). Thus it must be taken into account that the realization of the high resolution when using the "full" lenses (of some parts of millimeter and higher) demands more time for scanning of the subject area under study. Other circumstances must be taken into account as well, such as the availability the X-ray sources of needed capacity and size, etc.

The availability of described embodiment and many other embodiments of the proposed method and device gives various opportunities for construction of the means for intraviewing, satisfying the placed concrete requirements.

**Literature**

1. The Polytechnical Dictionary. Moscow, publ. house "Soviet Encyclopaedia", 1976.

2. The Physics of Image Visualization in Medicine. Ed. by S. Webb. Moscow, publ.hause "Mir", 1991.

3. V.V. Piklov, N.G. Preobrazhenskiy. Computational Tomography and Physics Experiment. The Progress of Physics, v. 141, issue 3, November 1983.

4. J. Jackson. Classical Electrodynamics. Moscow, publ. house "Mir", 1965.

5. E. Lapshin. Graphics for IBM PC. Moscow, publ. house "Solon", 1995.

6. V.A. Arkadiev, A.I. Kolomiytsev, M.A. Kumakhov, and others. Broadband X-ray Optics with Large Angular Aperture. The Progress of Physics, 1989, v. 157, issue 3.

7. U.S. Patent No. 5744813 (published 04.28.98).

8. V.I. Mazurov, E.G. Zotkin. The Topical Questions of Osteoporosis Diagnostics and Treatment. Saint-Petersburg, IKF "Foliant", 1998.

**Claims**

1. A method of producing the image of the internal structure of an object by X-rays, when the object is irradiated by the X-rays, and the output signals of one or more detectors of radiation are used to get the information about the substance density of the object, wherein the X-rays are concentrated in a zone within the object's are (7) under investigation; said zone comprising a point (4), to which the current results of measurements are referred; secondary radiation arising in said zone is directed to one or more detectors (6);
scanning of said object's area (7) under study is carried out by movement of said zone;
the density of the object's substance in said point is rated on the set of values of the secondary radiation intensities obtained by means of one or more detectors (6), and determined simultaneously with coordinates of said point (4), to which current results of measurements are referred, in the zone of concentration of X-ray radiation;

pattern of distribution of the substance density in said object's area (7) under study is reconstructed on the base of values of density and the corresponding values of coordinates.

**2.** The method of claim 1, wherein
X-rays are concentrated in the zone (16), including the point, to which current results of measurements are referred, placed in the object's area under study, by means of one or more collimators (13, 18), using corresponding number of X-ray sources spaced apart (1);
arising secondary radiation is directed to one or more detectors (6, 20) by one or more collimators (15,19) as well;
thus all collimators are oriented in a way that axes of their central channels are crossed in said point, current results of measurements are referred to.

**3.** The method of claim 1, wherein
X-rays are concentrated in the zone (16), including the point to which current results of measurements are referred, by means of one or more X-ray half-lenses (21), transferring the divergent radiation of corresponding number of X-ray sources (1), spaced apart, to quasi-parallel;
arising secondary radiation is directed to one or more detectors (6, 20) by means of one or more X-ray half-lenses (22, 23), focusing said radiation on the detectors or forming quasi-parallel radiation;
thus all X-ray half-lenses are oriented in a way that their optic axes are crossed in the point, current results of measurements are referred to.

**4.** The method of claim 1, wherein
X-rays are concentrated in the zone (16), including the point, current results of measurements are referred to, by means of one or more X-ray half-lenses (21), transferring the divergent radiation of corresponding number of X-ray sources (1), spaced apart, to quasi-parallel;
arising secondary radiation is directed to one or more detectors (6) by means of one or more X-ray lenses (3), focusing said radiation on the detectors (6);
thus all X-ray half-lenses and lenses are oriented in a way that their optic axes are crossed in the point, current results of measurements are referred to.

**5.** The method of claim 1, wherein
X-rays are concentrated in the zone (16), including the point, to which current results of measurements are referred, placed within the area under study, by means of one or more X-ray half-lenses (21), transferring the divergent radiation of corresponding number of X-ray sources (1), spaced apart, to quasi-parallel;
arising secondary radiation is directed to one or more detectors (20) by means of one or more collimators (19);
thus X-ray half-lenses and collimators are oriented in a way that the potic axes of the half-lenses and the central channels of the collimators are crossed in the point, current results of measurements are referred to.

**6.** The method of claim 1, wherein
X-rays are concentrated in the zone (4), including the point, to which current results of measurement are referred placed within the area under study, by means of one or more X-ray sources (1) and corresponding number of X-ray lens (2), focusing the divergent X-rays of each source (1) in said point (4) current results of measurements are referred to;
arising secondary radiation is directed to one or more detectors (6) by means of X-ray lenses (3), focusing said radiation on the detectors (6) and having the second focus in said point.

**7.** The method of claim 1, wherein
X-rays are concentrated in the zone (4), including the point, to which current results of measurements are referred, placed within the area under study, by means of one or more X-ray sources (1), using one or more X-ray sources (1), spaced apart, and corresponding number of X-ray lenses (2), focusing the divergent X-rays of each source (1) in said point (4), current results of measurements are referred to;
arising secondary radiation is directed to one or more detectors (6, 20) by means of collimators (15, 19), oriented in a way that the optic axes of their central channels cross in said point.

**8.** A device for producing the image of the internal structure of an object by X-rays, comprising:

means for positioning (10) of the object under study (5);

a X-ray system (8);

means for relative displacement of the means for positioning (10) of the object under study (5) and the X-ray system (8);

means (12) for data processing and image, wherein the X-ray system (8) comprises one or more X-ray sources (1);

means for concentrating (2) of radiation of said one or more X-ray sources (1) in the zone, including the point (4), to which current results of measurements are referred;

one or more means (3) for arising secondary radiation;

detectors (6) of said radiation, placed at the outputs of said means (3);

outputs of said detectors is connected to the means (12) for data processing and image;

detectors (11) for determination the coordiantes of the point (4) are connected with the means for positioning (1) of the object (5) under study and X-ray system (8);

said point (4) within the object's (5) area under study, to which said measurement results are referred;

said detectors (11) are connected by their outputs to the means (12) for data processing and image.

9. The device of claim 8, wherein the X-ray system comprises several X-ray sources (1, 17); means for the concentration of the radiation of said sources in the zone (16), including the point, to which the current results of measurements are referred, and means for directing the secondary radiation, arising in said point, to detectors (6/20) are formed as a collimator (13, 15, 18, 19); said collimators have channels, oriented in the zone (16) of concentration of the radiation of the said X-ray sources; thus the optical axes of the central channels of all collimators cross in the point, to which the current results of measurements are referred.

10. The device of claim 9, wherein X-ray sources (1), comprised in the X-ray system (8), are quasi-pointed; collimators (13, 15) have channels, focused on said sources and being divergent in the direction to the means for positioning the object (5) under study; a screen (4) with an aperture is placed between the output of each X-ray source (1) and the input of corresponding collimator (13).

11. The device of claim 9, wherein X-ray sources (17), comprised in the X-ray system (8), are prolongated; collimators (18, 19) have channels, converging in the direction to the means for. positioning the object under study.

12. The device of claim 8, wherein the X-ray sources (1), comprised in the X-ray system (8), are quasi-pointed; means for X-ray concentration in the zone (16), including the point, to which the current results of meanurements are referred, are formed as X-ray half-lens (21), transforming the divergent radiation of the corresponging source (1) to quasi-parallel;

means for arising secondary radiation transporting to the detector (6) are formed as X-ray half-lens (22), focusing said radiation on the detector (6); thus optic axes of all X-ray half-lenses cross in the point, to which current results of measurements are referred.

13. The device of claim 8, wherein the X-ray sources (1), comprised in the X-ray system (8), are quasi-pointed; means for X-ray concentration in the zone (16), including the point, to which the current results of measurements are referred, are formed as X-ray half-lens (21), transforming the divergent radiation of the corresponding source (1) to quasi-parallel; means for arising secondary radiation transporting to the detector are formed as X-ray half-lens (23), forming quasi-parallel radiation and having the focus in the zone (16) of radiation concentration; thus optic axed of all X-ray half-lenses cross in the point, to which the current results of measurements are referred.

14. The device of claim 8, wherein the X-ray sources (1), comprised in the X-ray system (8), are quasi-pointed; means for X-ray concentration in the zone (16), including the point, to which the current results of measurements are referred, are formed as X-ray half-lens (21), transforming the divergent radiation of the corresponding source (1) to quasi-parallel; means for arising secondary radiation transporting to the detector (6) are formed as X-ray lens (3), focusing said radiation on the detector (6) and having the second focus in the zone (16) of radiation concentration; optic axes of all X-ray half-lenses and lenses cross in the point, to which the current results of measurements are referred.

15. The device of claim 8, wherein the X-ray sources (1), comprised in the X-ray system (8), are quasi-pointed; means for X-ray concentration in the zone (16), including the point, to which the current results of measurements are referred, are formed as X-ray half-lens (21), transforming the divergent radiation of the corresponding source (1) to quasi-parallel; means for arising secondary radiation transporting to the detector (20) are formed as a collimator (19) with channels, diverging to the direction of the corresponding detector; optic axes of all X-ray lenses, half-lenses, and the central channels of the collimators cross in the point, to which the current results of measurements are referred.

16. The device of claim 8, wherein the X-ray sources (1), comprised in the X-ray system (8), are quasi-pointed;

means for X-ray concentration in the zone (16), including the point, to which the current results of measurements are referred, are formed as X-ray half-lens (21), transforming the divergent radiation of the corresponding source to quasi-parallel;

means for arising secondary radiation transporting to the detector (6) is made as a collimator (16) with the channels, converging to the direction of the corresponding detector;

optic axes of all X-ray half-lenses and the central channels of the collimators cross in the point, to which the current results of measurements are referred.

17. The device of claim 8, wherein the X-ray sources (1), comprised in the X-ray system (8), are quasi-pointed;

means for X-ray concentration in the zone (16), including the point (4) to which the current results of measurements are referred, are formed as X-ray lens (2), focusing the divergent radiation of X-ray source (1);

means for arising secondary radiation transporting to the detector (6) are formed as X-ray lens (3), focusing said radiation on the corresponding detector;

optic axes of all X-ray lenses cross in the point, to which the current results of measurements are referred.

18. The device of claim 8, wherein the X-ray sources (1), comprised in the X-ray system (8), are quasi-pointed;

means for X-ray concentration in the zone (16), including the point, to which the current results of measurements are referred, are formed as X-ray lens (2), focusing the divergent radiation of X-ray source (1);

means for arising secondary radiation transportin to the detector (6) are formed as the collimator (15) with the channels, converging to the direction of the corresponding detector;

optic axes of all X-ray lenses and the central channels of the collimators cross in the point, to which the current results of measurements are referred.

19. The device of claim 8, wherein the X-ray sources (1), comprised in the X-ray system (8), are quasi-pointed;

means for X-ray concentration in the zone (16), including the point, to which the current results of measurements are referred, are formed as X-ray lens (2), focusing the divergent radiation of X-ray source (1);

means for arising secondary radiation transporting to the detector (20) are formed as a collimator (19) with channels, diverging to the direction of the corresponding detector;

thus optic axes of all X-ray lenses and the central channels of the collimators cross in the point, to which the current results of measurements are referred.

Fig. 1

Fig. 2

Fig. 3

Fig. 4

Fig. 5

Fig. 6

Fig. 7

Fig. 8

Fig. 9

Fig. 10

Fig. 11

EP 1 202 045 A1

### INTERNATIONAL SEARCH REPORT

International application No
PCT/ RU 00/00207

**A. CLASSIFICATION OF SUBJECT MATTER:**
IPC 7 G01N 23/223

According to International Patent Classification (IPC) or to both national classification and IPC

**B. FIELDS SEARCHED**

Minimum documentation searched (classification system followed by classification symbols)
IPC 7 G01N 23/00, 23/22, 23/223

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category | Citation of document, with indication, where appropriate, of the relevant passages | Relevant to claim No. |
|---|---|---|
| Y | US 4423522 A (U.S. PHILIPS CORPORATION) 27 December 1983 (27.12.83) | 1, 2, 8 |
| A | | 3, 7, 9-19 |
| Y | US 5778039 A (ADVANCED MICRO DEVICES, INC.) 7 July 1998 (07.07.98) the abstract | 1, 2, 8 |
| A | | 3-7, 9-19 |
| Y | US 5425066 A (SEIKO INSTRUMENTS INC.) 13 June 1995 (13.06.95) claim 1 | 1, 2, 8 |
| A | | 3-7, 9-19 |
| Y | RU 2072515 C1 (AKTSIONERNOE OBSCHESTVO "ELSKORT") 21 January 1997 (21.01.97) | 1, 2, 8 |
| A | | 3-7, 9-19 |
| A | EP 0414562 A2 (MICRONAS INC.) 27 February 1991 (27.02.91) | 3-7, 9-19 |
| A | DE 1268410 A (N.V. PHILIPS GLOEILAMPENFABRIEKEN) 16 May 1968 (16.05.68) | 3-7, 9-19 |

☐ Further documents are listed in the continuation of Box C    ☐ See patent family annex.

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search report 18 October 2000 (18.10.00) | Date of mailing of the international search report 13 November 2000 (13.11.00) |
|---|---|
| Name and mailing address of the ISA/ RU | Authorized officer |
| Facsimile No. | Telephone No. |

Form PCT/ISA/210 (second sheet) (July 1992)

18